# EUROPÄISCHE PATENTANMELDUNG

(11) **EP 4 135 088 A1**
(43) Veröffentlichungstag der Anmeldung: **15.02.2023**
(21) Anmeldenummer: 21195983.8
(22) Anmeldetag: 10.09.2021
(51) Int. Cl.: H01M 10/052, H01M 50/107, H01M 50/152, H01M 50/545, H01M 50/179, H01M 50/183, H01M 50/548, H01M 50/559, H01M 10/04

(54) **ENERGIESPEICHERELEMENT, VERBUND AUS ENERGIESPEICHERELEMENTEN UND HERSTELLUNGSVERFAHREN**

(30) Priorität: 11.08.2021 WO PCT/EP2021/072428
(71) Anmelder: VARTA Microbattery GmbH, 73479 Ellwangen Jagst (DE)
(72) Erfinder: Cadus, Stefanie, 73430 Aalen (DE); Ensling, David, 73479 Ellwangen (DE); Pytlik, Edward, 73479 Ellwangen (DE); Schein, Herbert, 86754 Munningen (DE); Stock, Stefan, 73492 Rainau-Dalkingen (DE); Stutz, Reiko, 86720 Nördlingen (DE)
(74) Vertreter: Ostertag & Partner Patentanwälte mbB

(57) **Zusammenfassung**

Ein Energiespeicherelement (100) umfasst ein luft- und flüssigkeitsdicht verschlossenes Gehäuse und einen darin angeordneten Elektroden-Separator-Verbund (104). Der Elektroden-Separator-Verbund (104) umfasst eine Anode (105) mit einem Anodenstromkollektor (106) sowie eine Kathode (108) mit einem Kathodenstromkollektor (109), wobei der Anodenstromkollektor (106) und der Kathodenstromkollektor (109) jeweils einen Hauptbereich, der mit einer Schicht aus einem Elektrodenmaterial (107, 110) beladen ist, sowie entlang eines ersten Längsrands (106a, 109a) einen freien Randstreifen (106b, 109b), der nicht mit dem Elektrodenmaterial beladen ist, umfassen, und die Anode (105) und die Kathode (108) derart angeordnet sind, dass der erste Rand (106a) des Anodenstromkollektors (106) aus einer ersten flachen endständigen Stirnseite (104a) und der erste Rand (109a) des Kathodenstromkollektors (109) aus einer zweiten flachen endständigen Stirnseite (104b) des Elektroden-Separator-Verbunds (104) austreten. Das Gehäuse umfasst ein metallisches, becherförmig ausgebildetes Gehäuseteil (101) mit einem Gehäuseboden (101a) und einer endständigen Öffnungsowie ein Deckelbauteil (102) mit einer Deckelplatte (102a), das in die endständige Öffnung eingeschweißt ist und diese verschließt. Durch eine Durchbrechung in der Deckelplatte (102a) ist ein Anschlusspol (102b) geführt und gegenüber der Deckelplatte (102a) elektrisch isoliert. Das Energiespeicherelement umfasstein Kontaktblech (111), das auf dem ersten Rand (106a) desAnodenstromkollektors (106) aufsitzt und mit diesem durch Verschweißung verbunden ist und das zugleich mit dem durch die Durchbrechung in der Deckelplatte (102a) geführten Anschlusspol (102b) elektrisch verbunden ist.

Es wird vorgeschlagen, dass der Anschlusspol (102b) einen ersten Kontaktierungsbereich (102c) aus Nickel oder Kupfer oderTitan oder einer Nickel- oder Kupfer- oder Titanlegierung oder Edelstahl und einen zweiten Kontaktierungsbereich (102d) aus Aluminium oder einer Aluminiumlegierung umfasst, wobei der zweite Kontaktierungsbereich (102d) von außerhalb des Gehäuses mechanisch kontaktierbar ist.

## Beschreibung

Die nachstehend beschriebene Erfindung betrifft ein Energiespeicherelement, einen Verbund aus Energiespeicherelementen und ein Herstellungsverfahren.

### ANWENDUNGSGEBIET UND STAND DER TECHNIK

Elektrochemische Energiespeicherelemente sind dazu in der Lage, gespeicherte chemische Energie durch eine Redoxreaktion in elektrische Energie umzuwandeln. Die einfachste Form eines elektrochemischen Energiespeicherelements ist die elektrochemische Zelle. Sie umfasst eine positive und eine negative Elektrode, die von einem Separator voneinander getrennt sind. Bei einer Entladung werden an der negativen Elektrode durch einen Oxidationsprozess Elektronen freigesetzt. Hieraus resultiert ein Elektronenstrom, der von einem externen elektrischen Verbraucher abgegriffen werden kann, für den die elektrochemische Zelle als Energielieferant dient. Zugleich kommt es zu einem der Elektrodenreaktion entsprechenden lonenstrom innerhalb der Zelle. Dieser lonenstrom durchquert den Separator und wird durch einen ionenleitenden Elektrolyten ermöglicht.

Wenn die Entladung reversibel ist, also die Möglichkeit besteht, die bei der Entladung erfolgte Umwandlung von chemischer Energie in elektrische Energie wieder umzukehren und die Zelle wieder zu laden, spricht man von einer sekundären Zelle. Die bei sekundären Zellen allgemein übliche Bezeichnung der negativen Elektrode als Anode und die Bezeichnung der positiven Elektrode als Kathode bezieht sich auf die Entladefunktion der elektrochemischen Zelle.

Für viele Anwendungen werden als Energiespeicherelemente heute sekundäre Lithium-Ionen-Zellen eingesetzt, da diese hohe Ströme bereitstellen können und sich durch eine vergleichsweise hohe Energiedichte auszeichnen. Sie basieren auf dem Einsatz von Lithium, welches in Form von Ionen zwischen den Elektroden der Zelle hin und her wandern kann. Die negative Elektrode und die positive Elektrode einer Lithium-Ionen-Zelle werden in der Regel von sogenannten Kompositelektroden gebildet, die neben elektrochemisch aktiven Komponenten auch elektrochemisch inaktive Komponenten umfassen.

Als elektrochemisch aktive Komponenten (Aktivmaterialien) für sekundäre Lithium-Ionen-Zellen kommen prinzipiell sämtliche Materialien in Frage, die Lithium-Ionen aufnehmen und wieder abgeben können. Für die negative Elektrode werden hierfür beispielsweise Partikel auf Kohlenstoffbasis, wie beispielsweise graphitischer Kohlenstoff, eingesetzt. Als Aktivmaterialien für die positive Elektrode können beispielsweise Lithiumcobaltoxid (LiCoO₂), Lithiummanganoxid (LiMn₂O₄), Lithiumeisenphosphat (LiFePO₄) oder Derivate hiervon eingesetzt werden. Die elektrochemisch aktiven Materialien sind in der Regel in Partikelform in den Elektroden enthalten.

Als elektrochemisch inaktive Komponenten umfassen die Kompositelektroden im Allgemeinen einen flächigen und/oder bandförmigen Stromkollektor, beispielsweise eine metallische Folie, der als Träger für das jeweilige Aktivmaterial dient. Der Stromkollektorfür die negative Elektrode (Anodenstromkollektor) kann beispielsweise aus Kupfer oder Nickel und der Stromkollektor für die positive Elektrode (Kathodenstromkollektor) beispielsweise aus Aluminium gebildet sein. Weiterhin können die Elektroden als elektrochemisch inaktive Komponenten einen Elektrodenbinder (z. B. Polyvinylidenfluorid (PVDF) oder ein anderes Polymer, beispielsweise Carboxymethylzellulose), leitfähigkeitsverbessernde Additive und andere Zusätze umfassen. Der Elektrodenbinder gewährleistet die mechanische Stabilität der Elektroden und häufig auch die Haftung des Aktivmaterials auf den Stromkollektoren.

Als Elektrolyten umfassen Lithium-Ionen-Zellen in der Regel Lösungen von Lithiumsalzen wie Lithiumhexafluorophosphat (LiPF₆) in organischen Lösungsmitteln (z. B. Ether und Ester der Kohlensäure).

Die Kompositelektroden werden bei der Herstellung einer Lithium-Ionen-Zelle mit einem oder mehreren Separatoren zu einem Verbundkörper kombiniert. Hierbei werden die Elektroden und Separatoren meist unter Druck, gegebenenfalls auch durch Lamination oder durch Verklebung, miteinander verbunden. Die grundsätzliche Funktionsfähigkeit der Zelle kann dann durch Tränkung des Verbunds mit dem Elektrolyten hergestellt werden.

In vielen Ausführungsformen wird der Verbundkörper in Form eines Wickels gebildet oder zu einem Wickel verarbeitet. In der Regel umfasst er die Sequenz positive Elektrode / Separator / negative Elektrode. Häufig werden Verbundkörper als sogenannte Bizellen mit den möglichen Sequenzen negative Elektrode/Separator/positive Elektrode/Separator/negative Elektrode oder positive Elektrode/Separator/negative Elektrode/Separator/positive Elektrode hergestellt.

Für Anwendungen im Automobilbereich, für E-Bikes oder auch für andere Anwendungen mit hohem Energiebedarf wie z.B. in Werkzeugen werden Lithium-Ionen-Zellen mit möglichst hoher Energiedichte benötigt, die gleichzeitig in der Lage sind, mit hohen Strömen beim Laden und Entladen belastet zu werden.

Häufig sind Zellen für die genannten Anwendungen als zylindrische Rundzellen ausgebildet, beispielsweise mit dem Formfaktor 21 × 70 (Durchmesser mal Höhe in mm) Zellen dieser Art umfassen stets einen Verbundkörper in Form eines Wickels. Moderne Lithium-Ionen-Zellen dieses Formfaktors können bereits eine Energiedichte von bis zu 270 Wh/kg erreichen. Diese Energiedichte wird allerdings nur als Zwischenschritt angesehen. Vom Markt werden bereits Zellen mit noch höheren Energiedichten gefordert.

In der WO 2017/215900 A1 sind zylindrische Rundzellen beschrieben, bei denen der Elektroden-Separator-Verbund sowie dessen Elektroden bandförmig ausgebildet sind und in Form eines Wickels vorliegen. Die Elektroden weisen jeweils mit Elektrodenmaterial beladene Stromkollektoren auf. Entgegengesetzt gepolte Elektroden sind innerhalb des Elektroden-Separator-Verbunds versetzt zueinander angeordnet, so dass Längsränder der Stromkollektoren der positiven Elektroden an einer Seite und Längsränder der Stromkollektoren der negativen Elektroden an einer weiteren Seite aus dem Wickel austreten. Zur elektrischen Kontaktierung der Stromkollektoren weist die Zelle eine Kontaktplatte auf, die auf einer Stirnseite des Wickels aufsitzt und mit einem Längsrand eines der Stromkollektoren durch Verschweißung verbunden ist. Dadurch ist es möglich, den Stromkollektor und damit auch die dazugehörige Elektrode über seine / ihre gesamte Länge elektrisch zu kontaktieren. Dies senkt den Innenwiderstand innerhalb der beschriebenen Zelle sehr deutlich. Das Auftreten großer Ströme kann in der Folge sehr viel besser abgefangen und auch Wärme kann besser aus dem Wickel abgeführt werden.

Zylindrische Rundzellen wie die in der WO 2017/215900 A1 werden meist als Teil eines Zellverbunds eingesetzt, in dem mehrere Zellen seriell und/oder parallel miteinander verschaltet sind. Häufig ist es gewünscht, die Zellen zum Abgreifen einer elektrischen Spannung nur an einer ihrer Stirnseiten kontaktieren zu müssen. Es ist entsprechend vorteilhaft, an einer der Stirnseiten sowohl einen mit der positiven Elektrode der Zelle verbundenen Anschlusspol als auch einen mit der negativen Elektrode der Zelle verbundenen Anschlusspol vorzusehen.

Aus der US 2006/0019150 A1 ist eine Lithium-Ionen-Rundzelle bekannt, die in einem zylindrischen Gehäuse einen als Wickel ausgebildeten Elektroden-Separator-Verbund umfasst. Das Gehäuse umfasst einen zylindrischen Gehäusebecher aus Metall mit einer Öffnung, die durch ein metallisches Deckelbauteil verschlossen ist. Der Boden des Gehäusebechers ist elektrisch mit der positiven Elektrode des Wickels verbunden, der Gehäusebecher ist daher positiv gepolt. Beide Gehäuseteile stehen unmittelbar miteinander in Kontakt, weshalb das Deckelbauteil ebenfalls positiv gepolt ist. Auf das Deckelbauteil ist ein positiver metallischer Anschlusspol geschweißt. Die negative Elektrode des Wickels ist dagegen mit einem negativen metallischen Anschlusspol verbunden, der durch eine Durchbrechung im Deckelbauteil geführt und gegenüber dem Deckelbauteil elektrisch isoliert ist. Der positive und der negative Anschlusspol sind somit auf der gleichen Seite der Zelle nebeneinander angeordnet, so dass die Zelle über entsprechende Stromleiter leicht in einem Zellverbund integriert werden kann.

Neben ihrer guten Kontaktierbarkeitzeichnet sich die in der US 2006/0019150 A1 beschriebene Zelle auch durch eine integrierte Überdrucksicherung aus. Der Boden weist hierzu einen zentralen, kreisrunden Bereich auf, der von einem ringförmigen Restbereich des Bodens durch eine umlaufende Schwächungslinie abgegrenzt ist und an den innenseitig ein umgebogener Ableiterstreifen geschweißt ist, über den besagter elektrischer Kontakt des Bodens zur positiven Elektrode des Wickels besteht. Im Falle eines Überdrucks innerhalb des Gehäuses kann der kreisrunde Bereich aus dem Boden gesprengt werden. Da durch einen ringförmigen Isolator gewährleistet ist, dass der ringförmige Restbereich keinerlei Kontakt zu dem als Wickel ausgebildeten Elektroden-Separator-Verbund hat, wird dabei die elektrische Verbindung zwischen der positiven Elektrode und dem ringförmigen Restbereich sowie allen damit elektrisch in Kontakt stehenden Bauteilen, einschließlich des positiven Anschlusspols, unterbrochen.

Die negative Elektrode des Wickels ist über einen mehrfach gebogenen Ableiterstreifen elektrisch kontaktiert, dessen oberes Ende an den negativen Anschlusspol gekoppelt ist.

Unter energetischen Aspekten ist die Konstruktion der in der US 2006/0019150 A1 beschriebene Zelle nicht optimal. An beiden Enden des Wickels findet sich ein Totvolumen, zu dessen Überbrückung die genannten Ableiterstreifen erforderlich sind. Diese wirken sich negativ auf die Energiedichte der Zelle aus. Weiterhin bestehen auch Zweifel hinsichtlich der Zuverlässigkeit der Überdrucksicherung. Sofern die genannte Schwächungslinie beim Auslösen der Überdrucksicherung nicht über ihre komplette Länge reißt, wird die elektrische Verbindung zum positiven Anschlusspol nicht vollständig unterbrochen und es kann weiter Strom fließen.

### AUFGABE UND LÖSUNG

Der vorliegenden Erfindung lag die Aufgabe zugrunde, Energiespeicherelemente bereitzustellen, die sich durch eine gegenüber dem Stand der Technik verbesserte Energiedichte auszeichnen und die effizient zu einem Zellverbund verarbeitet werden können. Weiterhin sollen sich die Energiespeicherelemente auch durch eine verbesserte Sicherheit auszeichnen.

Diese Aufgabe wird durch das nachfolgend beschriebene Energiespeicherelement gelöst. Auch der nachfolgend beschriebene Verbund aus Energiespeicherelementen und das nachfolgend beschriebene Herstellungsverfahren sind Gegenstand der Erfindung. Eine besonders bevorzugte Ausführungsform des erfindungsgemäßen Energiespeicherelements, des erfindungsgemäßen Verbunds und des erfindungsgemäßen Verfahrens ist in den unabhängigen Ansprüchen 1, 8 und 9 definiert. Bevorzugte Ausführungsformen der Erfindung finden sich in den abhängigen Ansprüchen 2 bis 7.

### Erfindungsgemäßes Energiespeicherelement

Das erfindungsgemäße Energiespeicherelement weist stets die unmittelbar folgenden Merkmale a. bis l. auf:
a. Es umfasst ein luft- und flüssigkeitsdicht verschlossenes Gehäuse und einen darin angeordneten Elektroden-Separator-Verbund.
b. Das Gehäuse umfasst ein metallisches, becherförmig ausgebildetes Gehäuseteil, das einen Gehäuseboden und eine endständige Öffnung umfasst.
c. Das Gehäuse umfasst ein Deckelbauteil, das in die endständige Öffnung des becherförmig ausgebildeten Gehäuseteils eingeschweißt ist und diese verschließt.
d. Das Deckelbauteil umfasst eine metallische Deckelplatte und einen Anschlusspol, der durch eine Durchbrechung in der Deckelplatte geführt und gegenüber der Deckelplatte elektrisch isoliert ist.
e. Der Elektroden-Separator-Verbund umfasst eine erste und eine zweite flache endständige Stirnseite.
f. Der Elektroden-Separator-Verbund umfasst eine Anode mit einem Anodenstromkollektor, der einen ersten und einen dazu parallelen zweiten Rand aufweist.
g. Der Anodenstromkollektor umfasst einen Hauptbereich, der mit einer Schicht aus negativem Elektrodenmaterial beladen ist, sowie einen freien Randstreifen, dersich entlangseines ersten Rands erstreckt und der nicht mit dem Elektrodenmaterial beladen ist.
h. Der Elektroden-Separator-Verbund umfasst eine Kathode mit einem Kathodenstromkollektor, der einen ersten und einen dazu parallelen zweiten Rand aufweist.
i. Der Kathodenstromkollektor umfasst einen Hauptbereich, der mit einer Schicht aus positivem Elektrodenmaterial beladen ist, sowie einen freien Randstreifen, dersich entlangseines ersten Rands erstreckt und der nicht mit dem Elektrodenmaterial beladen ist.
j. Die Anode und die Kathode sind innerhalb des Elektroden-Separator-Verbunds derart angeordnet, dass der erste Rand des Anodenstromkollektors aus der ersten endständigen Stirnseite und der erste Rand des Kathodenstromkollektors aus der zweiten endständigen Stirnseite des Elektroden-Separator-Verbunds austritt.
k. Das Energiespeicherelement umfasst ein Kontaktblech, das auf dem ersten Rand des Anodenstromkollektors aufsitzt und mit diesem durch Verschweißung verbunden ist.
l. Das Kontaktblech ist mit dem durch die Durchbrechung in der Deckelplatte geführten Anschlusspol elektrisch verbunden.

Besonders bevorzugt zeichnet sich das Energiespeicherelement mit den Merkmalen a. bis l durch die unmittelbar folgenden zusätzlichen Merkmale m. und n. aus:
m. Der Anschlusspol umfasst einen ersten Kontaktierungsbereich aus Nickel oder Kupfer oder Titan oder einer Nickel- oder Kupfer- oder Titanlegierung oder Edelstahl und einen zweiten Kontaktierungsbereich aus Aluminium oder einer Aluminiumlegierung.
n. Der zweite Kontaktierungsbereich ist von außerhalb des Gehäuses mechanisch kontaktierbar.

Das erfindungsgemäße Energiespeicherelement zeichnet sich also besonders bevorzugt durch einen Anschlusspol aus, der zwei unterschiedliche metallische Werkstoffe, auf der einen Seite Nickel oder Kupfer oder Titan oder die Nickel- oder Kupfer- oder Titanlegierung oder Edelstahl und auf der anderen Seite Aluminium oder die Aluminiumlegierung umfasst. Und da der Anschlusspol über das Kontaktblech mit dem Anodenstromkollektor elektrisch gekoppelt ist, handelt es sich bei dem Anschlusspol um einen negativen Anschlusspol.

Energiespeicherelemente mit einem solchen negativen Anschlusspol bieten den signifikanten Vorteil, dass sie sich einfach in einen Zellverbund integrieren lassen. Hierbei werden Pole mehrerer Energiespeicherelemente über einen gemeinsamen Stromleiter miteinander verschaltet. Produktionstechnisch kann es von Vorteil sein, die Pole der Zellen mittels Laser an den Stromleiter zu schweißen. Dies ist in der Regel unproblematisch nur dann möglich, wenn die zu verschweißenden Materialien die gleichen sind. Beispielsweise ist die Verschweißung eines Anschlusspols aus Kupfer an einen Stromleiter aus Aluminium mittels Laser nur schwer oder gar nicht zu realisieren. Mit dem zweiten Kontaktierungsbereich aus Aluminium oder einer Aluminiumlegierung ist dies hingegen problemlos möglich. So können selbst negative Anschlusspole einer Zelle mittels Laser über einen gemeinsamen Stromleiter verbunden werden.

Es ist besonders bevorzugt, dass der Anschlusspol einen ersten Kontaktierungsbereich aus Nickel oder Kupfer oder einer Nickel- oder Kupferlegierung oder Edelstahl und einen zweiten Kontaktierungsbereich aus Aluminium oder einer Aluminiumlegierung umfasst.

Geeignete Aluminiumlegierungen sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %. Geeignete Edelstähle sind beispielsweise Edelstähle vom Typ 1.4303 oder 1.4404 oder vom Typ SUS304 oder vernickelte Stähle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage.

### Aluminiumgehäuse

In einer besonders bevorzugten Ausführungsform der Erfindung zeichnet sich das erfindungsgemäße Energiespeicherelement durch mindestens eines der unmittelbar folgenden Merkmale a. bis d. aus:
a. Das becherförmig ausgebildete Gehäuseteil besteht aus Aluminium oder einer Aluminiumlegierung.
b. Die Deckelplatte besteht aus Aluminium oder einer Aluminiumlegierung.
c. Der Deckelbauteil umfasst einen separaten Anschlusspol, der auf der Deckelplatte fixiert ist, insbesondere an die Deckelplatte angeschweißt ist, und der aus Aluminium oder aus einer Aluminiumlegierung besteht.
d. Das becherförmig ausgebildete Gehäuseteil und die Deckelplatte und der separate Anschlusspol bestehen aus Aluminium oder einer Aluminiumlegierung.

Es ist bevorzugt, dass die unmittelbar vorstehenden Merkmale a. und b., besonders bevorzugt auch die Merkmale a. bis c. und a. bis d., in Kombination miteinander realisiert sind.

In dieser Ausführungsform besteht das Gehäuse des Energiespeicherelements im Wesentlichen (abgesehen von dem negativen Anschlusspol und dessen Isolierung) vollständig aus Aluminium oder aus der Aluminiumlegierung. Dies hat diverse Vorteile. Die Ausbildung von Lokalelementen bei einem Kontakt der Außenseite der Zelle mit Feuchtigkeit ist ausgeschlossen. Das Gehäuse selbst kann im Grunde auf allen seinen Seiten als positiver Anschlusspol dienen. Besonders bevorzugt wird die Zelle allerdings ausschließlich über das Deckelbauteil kontaktiert, wo sich ja auch der negative Anschlusspol befindet. Hierzu kann ein Stromableiter unmittelbaran die Deckelplatte geschweißt werden oder alternativ an dem separaten Anschlusspol fixiert werden, beispielsweise mittels Verschweißung. In diesem Fall handelt es sich bei dem separaten Anschlusspol um den positiven Anschlusspol.

Geeignete Aluminiumlegierungen für das becherförmig ausgebildete Gehäuseteil und die Deckelplatte sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

Das erfindungsgemäße Energiespeicherelement ist in bevorzugten Ausführungsformen prismatisch oder als Rundzelle ausgebildet.

### Prismatische Ausführungsform

In dieser Ausführungsform ist das Gehäuse prismatisch ausgebildet. Der Boden des becherförmigen Gehäuseteils und das Deckelbauteil weisen in dieser Ausführungsform bevorzugt eine polygonale, besonders bevorzugt eine rechteckige Grundfläche, auf. Die Form der endständigen Öffnung des becherförmigen Gehäuseteils entsprichtder Form des Bodens und des Deckelbauteils. Darüber hinaus umfasst das Gehäuse mehrere, bevorzugt vier, rechteckige Seitenteile, die den Boden und das Deckelbauteil miteinander verbinden. Der Elektroden-Separator-Verbund ist in dieser Ausführungsform bevorzugt ebenfalls prismatisch ausgebildet. Bei dem Elektroden-Separator-Verbund handelt es sich in diesem Fall bevorzugt um einen prismatischen Stapel aus mehreren Anoden, Kathoden und mindestens einem Separator, wobei der Elektroden-Separator-Verbund innerhalb des Stapels stets die Sequenz Anode / Separator / Kathode aufweist.

Zumindest die Anoden und Kathoden weisen bevorzugt eine rechteckige Grundfläche auf, wobei die Stromkollektoren der Anoden und der Kathoden jeweils den ersten und den dazu parallelen zweiten Rand aufweisen und jeweils entlang ihres ersten Randes den freien Randstreifen aufweisen, der nicht mit dem jeweiligen Elektrodenmaterial beschichtet ist. Im Falle mehrerer Separatoren zwischen den Anoden und Kathoden weisen die Separatoren bevorzugt ebenfalls eine rechteckige Grundfläche auf. Es ist jedoch auch möglich, dass ein bandförmiger Separator zum Einsatz kommt, der mehrere Anoden und Kathoden innerhalb des Stapels voneinander trennt.

Bei derersten und der zweiten flachen endständigen Stirnseite des Stapels handelt es sich beispielsweise um zwei gegenüberliegende oder benachbarte Seiten des Stapels. Aus einer dieser Stirnseiten treten die ersten Ränder der Anodenstromkollektoren hervor, aus der anderen die ersten Ränder der Kathodenstromkollektoren. Das Kontaktblech sitzt auf den ersten Rändern der Anodenstromkollektoren auf und ist mit diesen durch Verschweißung verbunden.

### Ausführungsform als zylindrische Rundzelle

In dieser Ausführungsform der Erfindung zeichnet sich das erfindungsgemäße Energiespeicherelement bevorzugt durch eine Kombination der unmittelbar folgenden Merkmale a. bis o. aus:
a. Die endständige Öffnung des becherförmig ausgebildeten Gehäuseteils ist kreisförmig ausgebildet und das becherförmig ausgebildete Gehäuseteil umfasst einen zylindrischen Gehäusemantel,
b. das Deckelbauteil, das die kreisförmige Öffnung des becherförmig ausgebildeten Gehäuseteils verschließt, weist einen kreisförmigen Umfang auf,
c. der Elektroden-Separator-Verbund liegt in Form eines zylindrischen Wickels vor, der neben der ersten und der zweiten flachen endständigen Stirnseite einen zwischen den Stirnseiten liegenden Wickelmantel aufweist,
d. in dem Gehäuse ist der Elektroden-Separator-Verbund axial ausgerichtet, so dass der Wickelmantel an der Innenseite des zylindrischen Gehäusemantels anliegt,
e. die Anode und der Anodenstromkollektor sind bandförmig ausgebildet, wobei der Anodenstromkollektor einen ersten Längsrand und einen zweiten Längsrand und zwei Endstücke umfasst,
f. bei dem ersten und dem dazu parallelen zweiten Rand des Anodenstromkollektors handelt es sich um die Längsränder des bandförmigen Anodenstromkollektors,
g. der mit einer Schicht aus negativem Elektrodenmaterial beladene Hauptbereich des Anodenstromkollektors ist bandförmig ausgebildet,
h. der freie Randstreifen erstreckt sich entlang des ersten Längsrands des Anodenstromkollektors,
i. die Kathode und der Kathodenstromkollektor sind bandförmig ausgebildet, wobei der Kathodenstromkollektor einen ersten Längsrand und einen zweiten Längsrand und zwei Endstücke umfasst,
j. bei dem ersten und dem dazu parallelen zweiten Rand des Kathodenstromkollektors handelt es sich um die Längsränder des bandförmigen Kathodenstromkollektors,
k. der mit einer Schicht aus positivem Elektrodenmaterial beladene Hauptbereich des Kathodenstromkollektors ist bandförmig ausgebildet,
l. der freie Randstreifen erstreckt sich entlang des ersten Längsrands des Kathodenstromkollektors,
m. der Separator oder die Separatoren des Elektroden-Separator-Verbunds sind bandförmig ausgebildet,
n. die Anode und die Kathode sind innerhalb des Elektroden-Separator-Verbunds derart angeordnet, dass der erste Längsrand des Anodenstromkollektors aus der ersten endständigen Stirnseite und der erste Längsrand des Kathodenstromkollektors aus der zweiten endständigen Stirnseite des Elektroden-Separator-Verbunds austritt, und
o. das Kontaktblech sitzt auf dem ersten Längsrand desAnodenstromkollektors auf und ist mit diesem durch Verschweißung verbunden.

Der Elektroden-Separator-Verbund umfasst in dieser Ausführungsform bevorzugt einen bandförmigen Separator oder zwei bandförmige Separatoren, der oder die jeweils einen ersten und einen zweiten Längsrand sowie zwei Endstücke aufweisen. Der Elektroden-Separator-Verbund umfasst die Elektroden und den oder den Separator stets mit der Sequenz Anode / Separator / Kathode. Besonders bevorzugt zeichnet sich das erfindungsgemäße Energiespeicherelement in dieser Ausführungsform durch das unmittelbar folgende Merkmal a. aus:
a. Das Gehäuse umfasst ein Deckelbauteil, das in die endständige Öffnung des becherförmig ausgebildeten Gehäuseteils eingeschweißt ist und diese verschließt.

Bevorzugt ist das Deckelbauteil mit dem kreisförmigen Umfang derart in der kreisförmigen Öffnung des becherförmig ausgebildeten Gehäuseteils angeordnet, dass der Rand entlang einer umlaufenden Kontaktzone an der Innenseite des becherförmig ausgebildeten Gehäuseteils anliegt, wobei der Rand des Deckelbauteils mit dem becherförmig ausgebildeten Gehäuseteil über eine umlaufende Schweißnaht verbunden ist.

Bevorzugt liegt die Höhe als zylindrische Rundzelle ausgebildeter Energiespeicherelemente im Bereich von 50 mm bis 150 mm. Der Durchmesser der zylindrischen Rundzellen liegt bevorzugt im Bereich von 15 mm bis 60 mm. Zylindrische Rundzellen mit diesen Formfaktoren eignen sich insbesondere zur Stromversorgung elektrischer Antriebe von Kraftfahrzeugen.

Wenn das erfindungsgemäße Energiespeicherelement als zylindrische Rundzelle ausgebildet ist, weist es bevorzugt einen Durchmesser von 26 mm und eine Höhe von 105-106 mm auf.

Der Anodenstromkollektor, der Kathodenstromkollektor und der Separator oder die Separatoren weisen in Ausführungsformen, bei denen die erfindungsgemäße Zelle eine zylindrische Rundzelle ist, bevorzugt die folgenden Dimensionen auf:
- Eine Länge im Bereich von 0,5 m bis 25 m
- Eine Breite im Bereich 30 mm bis 145 mm

Der freie Randstreifen, der sich entlang des ersten Längsrands erstreckt und der nicht mit dem Elektrodenmaterial beladen ist, weist in diesen Fällen bevorzugt eine Breite von nicht mehr als 5000 µm auf.

### Bevorzugte elektrochemische Ausführungsform

In einer weiteren besonders bevorzugten Ausführungsform der Erfindung zeichnet sich das erfindungsgemäße Energiespeicherelement durch eines der folgenden Merkmale aus:
a. Das Energiespeicherelement ist eine Lithium-Ionen-Zelle.
b. Das Energiespeicherelement umfasst eine Lithium-Ionen-Zelle.

Merkmal a. bezieht sich insbesondere auf die beschriebene Ausführungsform des erfindungsgemäßen Energiespeicherelements als zylindrische Rundzelle. In dieser Ausführungsform umfasst das Energiespeicherelement bevorzugt genau eine elektrochemische Zelle.

Merkmal b. bezieht sich insbesondere auf die beschriebene prismatische Ausführungsform des erfindungsgemäßen Energiespeicherelements. In dieser Ausführungsform kann das Energiespeicherelement auch mehr als eine elektrochemische Zelle umfassen.

Für die Elektroden des Energiespeicherelements können im Grunde sämtliche für sekundäre Lithium-Ionen-Zellen bekannten Elektrodenmaterialien verwendet werden.

In den negativen Elektroden können als Aktivmaterialien Partikel auf Kohlenstoffbasis wie graphitischer Kohlenstoff oder zur Interkalation von Lithium befähigte, nicht-graphitische Kohlenstoffmaterialien, bevorzugt ebenfalls in Partikelform, eingesetzt werden. Alternativ oder zusätzlich kann auch Lithiumtitanat (Li₄Ti₅O₁₂) oder ein Derivat desselben in der negativen Elektrode enthalten sein, bevorzugt ebenfalls in Partikelform. Weiterhin kann die negative Elektrode als Aktivmaterial mindestens ein Material aus der Gruppe mit Silizium, Aluminium, Zinn, Antimon oder eine Verbindung oder Legierung dieser Materialien, die Lithium reversibel ein- und auslagern kann, beispielsweise Siliziumoxid (insbesondere SiOₓ mit 0 < x < 2), enthalten, gegebenenfalls in Kombination mit Aktivmaterialien auf Kohlenstoffbasis. Zinn, Aluminium, Antimon und Silizium in der Lage, mit Lithium intermetallische Phasen zu bilden. Die Kapazität zur Aufnahme von Lithium übersteigt dabei, insbesondere im Fall von Silizium, die von Graphit oder vergleichbaren Materialien um ein Vielfaches. Oft werden Mischungen aus Silizium- und Kohlenstoff-basierten Speichermaterialien eingesetzt. Weiterhin eignen sich auch dünne Anoden aus metallischem Lithium.

Für die positiven Elektroden kommen als Aktivmaterialien beispielsweise Lithium-Metalloxid-Verbindungen und Lithium-Metallphosphat-Verbindungen wie LiCoO₂ und LiFePO₄ in Frage. Weiterhin gut geeignet sind insbesondere Lithiumnickelmangancobaltoxid (NMC) mit der Summenformel Li-NiₓMn_{y}CO_{z}O₂ (wobei x + y + z typischerweise 1 ist), Lithiummanganspinell (LMO) mit der Summenformel LiMn₂O₄, oder Lithiumnickelcobaltaluminiumoxid (NCA) mit der Summenformel LiNiₓCo_{y}Al_{z}O₂ (wobei x + y + z typischerweise 1 ist). Auch Derivate hiervon, beispielsweise Lithiumnickelmangancobaltaluminiumoxid (NMCA) mit der Summenformel Li_{1.11}(Ni_{0.40}Mn_{0.39}Co_{0.16}Al_{0.05})_{0.89}O₂ oder Li₁₊ₓM-O Verbindungen und/oder Mischungen der genannten Materialien können eingesetzt werden. Auch die kathodischen Aktivmaterialien werden bevorzugt partikulär eingesetzt.

Daneben enthalten die Elektroden eines erfindungsgemäßen Energiespeicherelements bevorzugt einen Elektrodenbinder und/oder ein Additiv zur Verbesserung der elektrischen Leitfähigkeit. Die Aktivmaterialien sind bevorzugt in eine Matrix aus dem Elektrodenbinder eingebettet, wobei benachbarte Partikel in der Matrix bevorzugt in unmittelbarem Kontakt miteinanderstehen. Leitmittel dienen dazu, die elektrische Leitfähigkeit der Elektroden zu erhöhen. Übliche Elektrodenbinder basieren beispielsweise auf Polyvinylidenfluorid (PVDF), (Li-)Polyacrylat, Styrol-Butadien-Kautschuk oder Carboxymethylzellulose oder auch Mischungen unterschiedlicher Binder. Übliche Leitmittel sind Ruß, feine Grafite, Kohlenstofffasern, Carbon-Nanotubes und Metallpulver.

Das erfindungsgemäße Energiespeicherelement umfasst bevorzugt einen Elektrolyten, im Falle einer Lithium-Ionen-Zelle insbesondere einen Elektrolyten auf der Basis mindestens eines Lithiumsalzes wie beispielsweise Lithiumhexafluorophosphat (LiPF₆), das in einem organischen Lösungsmittel gelöst vorliegt (z. B. in einer Mischung organischer Carbonate oder einem cyclischen Ether wie THF oder einem Nitril). Andere einsetzbare Lithium-Salze sind beispielsweise Lithiumtetrafluoroborat (LiBF₄), Lithiumbis(trifluoromethansulfonyl)imid (LiTFSl), Lithiumbis(fluorosulfonyl)imid (LiFSl) und Lithiumbis(oxalato)borat (LiBOB).

Die Nennkapazität eines als zylindrische Rundzelle ausgebildeten erfindungsgemäßen Energiespeicherelements auf Lithium-Ionen-Basis beträgt bevorzugt bis zu 15000 mAh. Mit dem Formfaktor von 21 x70 hat das Energiespeicherelement in einer Ausführungsform als Lithium-Ionen-Zelle bevorzugt eine Nennkapazität im Bereich von 1500 mAh bis 7000 mAh, besonders bevorzugt im Bereich von 3000 bis 5500 mAh. Mit dem Formfaktor von 18 × 65 hat die Zelle in einer Ausführungsform als Lithium-Ionen-Zelle bevorzugt eine Nennkapazität im Bereich von 1000 mAh bis 5000 mAh, besonders bevorzugt im Bereich von 2000 bis 4000 mAh.

In der Europäischen Union sind Herstellerangaben zu Angaben betreffend die Nennkapazitäten von sekundären Batterien streng reglementiert. So haben etwa Angaben zur Nennkapazität von sekundären Nickel-Cadmium-Batterien auf Messungen gemäß den Normen IEC/EN 61951-1 und IEC/EN 60622, Angaben zur Nennkapazität von sekundären Nickel-Metallhydrid-Batterien auf Messungen gemäß der Norm IEC/EN 61951-2, Angaben zur Nennkapazität von sekundären Lithium-Batterien auf Messungen gemäß der Norm IEC/EN 61960 und Angaben zur Nennkapazität von sekundären Blei-Säure-Batterien auf Messungen gemäß der Norm IEC/EN 61056-1 zu basieren. Jegliche Angaben zu Nennkapazitäten in der vorliegenden Anmeldung basieren bevorzugt ebenfalls auf diesen Normen.

### Bevorzugte Ausführungsformen des Separators

Bevorzugt werden der Separator oder die Separatoren aus elektrisch isolierenden Kunststofffolien gebildet. Es ist bevorzugt, dass die Separatoren von dem Elektrolyten durchdrungen werden kann. Zu diesem Zweck können die verwendeten Kunststofffolien beispielsweise Mikroporen aufweisen. Die Folie kann beispielsweise aus einem Polyolefin oder aus einem Polyetherketon bestehen. Auch Vliese und Gewebe aus Kunststoffmaterialien oder andere elektrisch isolierende Flächengebilde können als Separator zum Einsatz kommen. Bevorzugt werden Separatoren eingesetzt, die eine Dicke im Bereich von 5 µm bis 50 µm aufweisen.

In einigen besonders bevorzugten Ausführungsformen werden Separatoren verwendet, die mit keramischen Partikeln (z.B. Al₂O₃ oder SiO₂) ein- oder beidseitig beschichtet oder imprägniert sind.

Insbesondere bei den prismatischen Ausführungsformen des Energiespeicherelements kann es sich bei dem Separator oder den Separatoren des Verbundes auch um eine oder mehrere Schichten aus einem Festelektrolyten handeln.

### Bevorzugte Struktur eines als Wickel ausgebildeten Elektroden-Separator-Verbunds

In dem als Wickel ausgebildeten Elektroden-Separator-Verbund liegen die bandförmige Anode, die bandförmige Kathode und der oder die bandförmigen Separatoren bevorzugt spiralförmig aufgewickelt vor. Zur Herstellungdes Elektroden-Separator-Verbunds werden die bandförmigen Elektroden gemeinsam mit dem oder den bandförmigen Separatoren einer Wickelvorrichtung zugeführt und in dieser bevorzugt um eine Wickelachse herum spiralförmig aufgewickelt. In einigen Ausführungsformen werden die Elektroden und der Separator hierzu auf einen zylindrischen oder hohlzylindrischen Wickelkern aufgewickelt, der aufeinem Wickeldorn sitzt und nach dem Wickeln im Wickel verbleibt.

Der Wickelmantel kann beispielsweise durch eine Kunststofffolie oder ein Klebeband gebildet sein. Es ist auch möglich, dass der Wickelmantel durch eine oder mehrere Separatorwindungen gebildet ist.

### Bevorzugte Ausführungsformen der Stromkollektoren

Die Stromkollektoren des Energiespeicherelements dienen dazu, im jeweiligen Elektrodenmaterial enthaltene elektrochemisch aktive Komponenten möglichst großflächig elektrisch zu kontaktieren. Bevorzugt bestehen die Stromkollektoren aus einem Metall oder sind zumindest oberflächlich metallisiert.

Im Falle eines als Lithium-Ionen-Zelle ausgebildeten erfindungsgemäßen Energiespeicherelements eignen sich als Metall für den Anodenstromkollektor beispielsweise Kupfer oder Nickel oder auch andere elektrisch leitfähige Materialien, insbesondere Kupfer- und Nickellegierungen oder mit Nickel beschichtete Metalle. Als Kupferlegierung können insbesondere Werkstoffe vom Typ EN CW-004A bzw. EN CW-008A mit einem Kupferanteil von mindestens 99,9% eingesetzt werden. Als Nickellegierungen kommen insbesondere Legierungen vom Typ NiFe, NiCu, CuNi, NiCr und NiCrFe in Frage. Als Nickellegierungen kommen insbesondere Legierungen vom Typ NiFe, NiCu, CuNi, NiCr und NiCrFe in Frage. Auch Edelstahl kommt grundsätzlich in Frage, beispielsweise vom Typ 1.4303 oder 1.4404 oder vom Typ SUS304.

Als Metall für den Kathodenstromkollektor eignen sich im Falle eines als Lithium-Ionen-Zelle ausgebildeten erfindungsgemäßen Energiespeicherelements insbesondere Aluminium oder auch andere elektrisch leitfähige Materialien, darunter auch Aluminiumlegierungen.

Geeignete Aluminiumlegierungen für den Kathodenstromkollektor sind beispielsweise Al-Legierungen vom Typ 1235, 1050, 1060, 1070, 3003, 5052, Mg3, Mg212 (Serie 3000) und GM55. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

Bevorzugt handelt es sich bei dem Anodenstromkollektor und/oder dem Kathodenstromkollektor jeweils um eine Metallfolie mit einer Dicke im Bereich von 4 µm bis 30 µm, im Fall der beschriebenen Konfiguration des Energiespeicherelements als zylindrische Rundzelle um eine bandförmige Metallfolie mit einer Dicke im Bereich von 4 µm bis 30 µm.

Neben Folien können als Stromkollektoren allerdings auch andere bandförmige Substrate wie metallische oder metallisierte Vliese oder offenporige metallische Schäume oder Streckmetalle verwendet werden.

Die Stromkollektoren sind bevorzugt beidseitig mit dem jeweiligen Elektrodenmaterial beladen.

Im Fall der beschriebenen Konfiguration des Energiespeicherelements als zylindrische Rundzelle ist es bevorzugt, dass die Längsränder des oder der Separatoren die Stirnseiten des als Wickel ausgebildeten Elektroden-Separator-Verbunds bilden.

Im Fall der beschriebenen prismatischen Konfiguration des Energiespeicherelements ist es bevorzugt, dass die Ränder des oder der Separatoren die Stirnseiten des Stapels bilden, aus denen die Ränder der Stromkollektoren hervortreten.

Es ist weiterhin bevorzugt, dass die aus den endständigen Stirnseiten des Wickels oder Seiten des Stapels austretenden Längsränder oder Ränder des Anodenstromkollektors und/oder des Kathodenstromkollektors nicht mehr als 5000 µm, bevorzugt nicht mehr als 3500 µm, aus den Stirnseiten oder den Seiten herausragen.

Besonders bevorzugt ragt der Rand oder der Längsrand des Anodenstromkollektors aus der Seite des Stapels oder der Stirnseite des Wickels nicht mehr als 2500 µm, besonders bevorzugt nicht mehr als 1500 µm, heraus. Besonders bevorzugt ragt der Rand oder der Längsrand des Kathodenstromkollektors aus der Seite des Stapels oder der Stirnseite des Wickels nicht mehr als 3500 µm, besonders bevorzugt nicht mehr als 2500 µm, heraus.

Die unmittelbare Kontaktierung des Rands des Anodenstromkollektors mit dem Kontaktblech senkt den Innenwiderstand des Energiespeicherelements und erhöht damit dessen Strombelastbarkeit.

### Bevorzugte Ausführungsformen des Kontaktblechs / Anbindung des Kontaktblechs an den Anodenstromkollektor und den negativen Anschlusspol

Das Kontaktblech ist mit dem durch die Durchbrechung in der Deckelplatte geführten negativen Anschlusspol und mit dem Anodenstromkollektor elektrisch verbunden. Insbesondere ist es unmittelbar an den ersten Kontaktierungsbereich und/oder den Anodenstromkollektor geschweißt.

In einer besonders bevorzugten Ausführungsform der Erfindung zeichnet sich das mit dem negativen Anschlusspol elektrisch verbundene Kontaktblech durch mindestens eines der unmittelbar folgenden Merkmale a. bis c. aus:
a. Das Kontaktblech besteht aus Nickel oder Kupfer oder Titan oder eine Nickel- oder Kupfer-oder Titanlegierung oder Edelstahl, beispielsweise vom Typ 1.4303 oder 1.4404 oder vom Typ SUS304, oder aus nickelplattiertem Kupfer.
b. Das Kontaktblech besteht aus dem gleichen Material wie der erste Kontaktierungsbereich.
c. Das Kontaktblech besteht aus dem gleichen Material wie der Anodenstromkollektor.

Es ist bevorzugt, dass die unmittelbar vorstehenden Merkmale a. und b., besonders bevorzugt auch die Merkmale a. bis c., in Kombination miteinander realisiert sind.

Wenn das Kontaktblech aus dem gleichen Material wie der erste Kontaktierungsbereich und/oder der Anodenstromkollektor besteht, ist das Verschweißen dieser Bauteile ohne Probleme möglich.

In einigen Ausführungsformen kann es bevorzugt sein, dass das Kontaktblech nicht unmittelbar mit dem ersten Kontaktierungsbereich verschweißt ist, sondern über einen separaten Stromleiter mit dem ersten Kontaktierungsbereich verbunden ist. In diesen Fällen ist der separate Stromleiters bevorzugt mit dem ersten Kontaktierungsbereich und dem Kontaktblech verschweißt. Weiterhin ist in diesen Fällen bevorzugt, dass der separate Stromleiter aus dem gleichen Material wie der erste Kontaktierungsbereich und/oder das Kontaktblech besteht.

Besonders bevorzugt besteht der separate Stromleiter aus Nickel oder Kupfer oder Titan oder einer Nickel- oder Kupfer- oder Titanlegierung oder aus Edelstahl, beispielsweise vom Typ 1.4303 oder 1.4404 oder vom Typ SUS304. Als Kupferlegierung können insbesondere Werkstoffe vom Typ EN CW-004A bzw. Als Nickellegierungen kommen insbesondere Legierungen vom Typ NiFe, NiCu, CuNi, NiCr und NiCrFe in Frage. EN CW-008A mit einem Kupferanteil von mindestens 99,9% eingesetzt werden. Dies alles gilt auch für das Kontaktblech selbst.

In einer weiteren besonders bevorzugten Ausführungsform der Erfindung zeichnet sich das mit dem negativen Anschlusspol elektrisch verbundene Kontaktblech durch mindestens eines der unmittelbar folgenden Merkmale a. bis g. aus:
a. Das Kontaktblech weist eine bevorzugt gleichmäßige Dicke im Bereich von 50 µm bis 600 µm, bevorzugt im Bereich von 150 µm bis 350 µm, auf.
b. Das Kontaktblech weist zwei sich gegenüberliegenden Flachseiten auf und erstreckt sich im Wesentlichen nur in einer Dimension.
c. Das Kontaktblech ist eine Scheibe oder eine bevorzugt rechteckige Platte.
d. Das Kontaktblech ist derart dimensioniert, dass es mindestens 60 % der Stirnseite, bevorzugt mindestens 70 %, besonders bevorzugt mindestens 80 %, der ersten endständigen Stirnseite abdeckt.
e. Das Kontaktblech weist mindestens eine Durchbrechung, insbesondere mindestens ein Loch und oder mindestens einen Schlitz, auf.
f. Das Kontaktblech weist mindestens eine Sicke auf, die auf einer Flachseite des Kontaktblechs als längliche Vertiefung und auf der gegenüberliegenden Flachseite als längliche Erhöhung zu Tage tritt, wobei das Kontaktblech mit der Flachseite, welche die längliche Erhöhung trägt, auf dem ersten Rand des Anodenstromkollektors aufsitzt.
g. Das Kontaktblech ist im Bereich der Sicke mit dem ersten Rand des Anodenstromkollektors verschweißt, insbesondere über eine oder mehrere in der Sicke angeordnete Schweißnähte.

Es ist besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind alle Merkmale a. bis g. in Kombination miteinander realisiert.

Die möglichst großflächige Abdeckung der Stirnseite ist für das thermische Management des erdungsgemäßen Energiespeicherelements von Bedeutung. Je größer die Abdeckung ist, desto eher ist es möglich, den ersten Rand des Anodenstromkollektors möglichst über seine gesamte Länge zu kontaktieren. In Elektroden-Separator-Verbund gebildete Wärme kann so gut über das Kontaktblech abgeführt werden.

Es hat sich in einigen Ausführungsformen als vorteilhaft erwiesen den Rand des Stromkollektors einer Vorbehandlung zu unterziehen, bevor das Kontaktblech aufgesetzt wird. Insbesondere kann in den Rand mindestens eine Vertiefung eingefalzt werden, die zu der mindestens einen Sicke bzw. der länglichen Erhöhung auf der der ersten endständigen Stirnseite zugewandten Flachseite des Kontaktblechs korrespondiert.

Der Rand des Stromkollektors kann auch durch eine Vorbehandlung einer gerichteten Umformung unterzogen worden sein. Beispielsweise kann er in eine definierte Richtung umgebogen sein.

Die mindestens eine Durchbrechung in dem Kontaktblech kann beispielsweise zweckmäßig sein, um den Elektroden-Separator-Verbund mit einem Elektrolyten tränken zu können.

### Elektrische Anbindung des Kathodenstromkollektors an das Gehäuse / Zweites Kontaktblech

In einer weiteren besonders bevorzugten Ausführungsform der Erfindung zeichnet sich das erfindungsgemäße Energiespeicherelement durch mindestens eines der unmittelbar folgenden Merkmale a. bis c. aus:
a. Das Energiespeicherelement umfasst ein zweites Kontaktblech, das auf dem ersten Rand des Kathodenstromkollektors aufsitzt und mit diesem durch Verschweißung verbunden ist.
b. Das zweite Kontaktblech ist mit dem becherförmig ausgebildetes Gehäuseteil elektrisch verbunden.
c. Das zweite Kontaktblech besteht aus Aluminium oder aus einer Aluminiumlegierung.

Es ist besonders bevorzugt, dass die unmittelbar vorstehenden Merkmale a. und b., bevorzugt auch die Merkmale a. bis c., in Kombination miteinander realisiert sind.

Mit dem zweiten Kontaktblech erhöht sich auch kathodenseitig die Strombelastbarkeit. Zudem verbessert sich das thermische Management des Energiespeicherelements weiter.

Als Aluminiumlegierungen kommen für das Kontaktblech beispielsweise Al-Legierungen vom Typ 1235, 1050, 1060, 1070, 3003, 5052, Mg3, Mg212 (Serie 3000) und GM55 in Frage. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

Das auf dem ersten Rand des Kathodenstromkollektors aufsitzende Kontaktblech ist bevorzugt, abgesehen von seiner materiellen Beschaffenheit, ähnlich dem auf dem ersten Rand des Anodenstromkollektors aufsitzenden Kontaktblech ausgebildet. Es zeichnet sich bevorzugt durch mindestens eines der unmittelbar folgenden Merkmale a. bis g. aus:
a. Das zweite Kontaktblech weist eine bevorzugt gleichmäßige Dicke im Bereich von 50 µm bis 600 µm, bevorzugt im Bereich von 150 µm bis 350 µm, auf.
b. Das zweite Kontaktblech weist zwei sich gegenüberliegenden Flachseiten auf und erstreckt sich im Wesentlichen nur in einer Dimension.
c. Das zweite Kontaktblech ist eine Scheibe oder eine bevorzugt rechteckige Platte.
d. Das zweite Kontaktblech ist derart dimensioniert, dass es mindestens 60 % der Stirnseite, bevorzugt mindestens 70 %, besonders bevorzugt mindestens 80 %, der zweiten endständigen Stirnseite abdeckt.
e. Das zweite Kontaktblech weist mindestens eine Durchbrechung, insbesondere mindestens ein Loch und oder mindestens einen Schlitz, auf.
f. Das zweite Kontaktblech weist mindestens eine Sicke auf, die auf einer Flachseite des Kontaktblechs als längliche Vertiefung und auf der gegenüberliegenden Flachseite als längliche Erhöhung zu Tage tritt, wobei das Kontaktblech mit der Flachseite, welche die längliche Erhöhung trägt, auf dem ersten Rand des Kathodenstromkollektors aufsitzt.
g. Das zweite Kontaktblech ist im Bereich der Sicke mit dem ersten Rand des Kathodenstromkollektors verschweißt, insbesondere über eine oder mehrere in der Sicke angeordnete Schweißnähte.

Auch hier ist es besonders bevorzugt, dass die unmittelbar vorstehenden Merkmale a. und b. und d. in Kombination miteinander realisiert sind. In einer bevorzugten Ausführungsform sind die Merkmale a. und b. und d. in Kombination mit einem der Merkmale c. oder e. oder den Merkmalen f. und g realisiert. Besonders bevorzugt sind auch hier alle Merkmale a. bis g. in Kombination miteinander realisiert.

Die Anbindung bzw. Anschweißung des ersten Rands des Kathodenstromkollektors an das zweite Kontaktblech ist bevorzugt analog zur oben beschriebenen Anbindung des ersten Rands des Anodenstromkollektors realisiert, also besonders bevorzugt über eine Verschweißung im Bereich der Sicke.

Weiterhin kann es auch hier bevorzugt sein, dass der Rand des Stromkollektors durch eine Vorbehandlung einer gerichteten Umformung unterzogen wurde. Beispielsweise kann er in eine definierte Richtung umgebogen sein.

In bevorzugten Ausführungsformen ist das zweite Kontaktblech unmittelbar mit dem Boden des becherförmigen Gehäuseteils oder einem Teil des Bodens verschweißt. In weiteren bevorzugten Ausführungsformen ist das zweite Kontaktblech über einen separaten Stromleiter mit dem Boden des becherförmigen Gehäuseteils verbunden. In letzterem Fall ist es bevorzugt, dass der separate Stromleiter sowohl mit dem Boden des becherförmigen Gehäuseteils als auch mit dem zweiten Kontaktblech verschweißt ist. Der separate Stromleiter besteht bevorzugt aus Aluminium oder einer Aluminiumlegierung.

Grundsätzlich auch direkte Anbindung des ersten Rands des Kathodenstromkollektors an den Boden möglich. Hierzu kann beispielsweise eine Verschweißung mittels Lasers von außen durch den Boden des becherförmigen Gehäuseteils vorgenommen werden.

### Bevorzugte Ausgestaltung des negativen Anschlusspols

In einer weiteren besonders bevorzugten Ausführungsform der Erfindung zeichnet sich das erfindungsgemäße Energiespeicherelement durch mindestens eines der unmittelbar folgenden Merkmale a. bis f. aus:
a. Der negative Anschlusspol umfasst ein rohrförmiges oder becherförmiges erstes Teil, das den ersten Kontaktierungsbereich umfasst.
b. Das rohrförmige oder becherförmige Teil besteht aus Nickel oder Kupfer oder Titan oder einer Nickel- oder Kupfer- oder Titanlegierung oder aus Edelstahl, beispielsweise vom Typ 1.4303 oder 1.4404 oder vom Typ SUS304 .
c. Der negative Anschlusspol umfasst ein endständiges rohrförmiges oder becherförmiges erstes Teil, das eine Hülle aus Nickel oder Kupfer oder einer Nickel- oder Kupferlegierung aufweist, insbesondere mit dem Nickel oder dem Kupfer oder der Nickel- oder Kupferlegierung beschichtet ist.
d. Der negative Anschlusspol umfasst ein zweites Teil aus Aluminium oder einer Aluminiumlegierung, das den zweiten Kontaktierungsbereich umfasst.
e. Das zweite Teil ist an dem ersten Teil mechanisch und/oder mittels Verschweißung fixiert.
f. Das zweite Teil umfasst einen stiftförmigen Abschnitt, der in dem rohrförmigen oder becherförmigen Teil mechanisch fixiert ist, bevorzugt in das rohrförmige oder becherförmige Teil eingepresst oder in dem rohrförmigen oder becherförmigen Teil mittels Verschraubung fixiert ist.

Es ist besonders bevorzugt, dass die unmittelbar vorstehenden Merkmale a. und b. in Kombination miteinander realisiert sind. In einer bevorzugten Ausführungsform sind die Merkmale a. und b. in Kombination mit den Merkmalen d. und e. oder in Kombination mit den Merkmalen d. bis f. realisiert. In einer alternativen Ausführungsform sind die Merkmale c., d. und e., besonders bevorzugt die vier Merkmale c. bis f., in Kombination miteinander realisiert.

Die Ausführungsformen, bei denen das erste Teil rohrförmig oder becherförmig ausgebildet ist, bieten eine einfache und elegante Lösung zur Bildung des negativen Anschlusspols. Das Teil bietet eine Aufnahme für den stiftförmigen Abschnitt des zweiten Teils, der in das erste eingeschoben und dort fixiert werden kann. Gegebenenfalls kann die mechanische Fixierung auch durch eine zusätzliche Schweißverbindung unterstützt werden.

Die elektrische Isolierung des negativen Anschlusspols gegenüber dem Deckelbauteil kann beispielsweise durch ein ringförmig um den Anschlusspol angeordnetes Isolierelement realisiert sein. Dieses kann beispielweise aus Glas, einem keramischen Werkstoff, einem elektrisch isolierenden Polymer oder einer Kombination dieser Werkstoffe bestehen.

### CID-Lösung im Bodenbereich

In einer weiteren besonders bevorzugten Ausführungsform der Erfindung zeichnet sich das erfindungsgemäße Energiespeicherelement durch eine Kombination der unmittelbar folgenden Merkmale a. bis e. aus:
a. Der Boden des becherförmig ausgebildeten Gehäuseteils umfasst eine Durchbrechung, insbesondere ein bevorzugt kreisrundes Loch, die mittels einer metallischen Membran verschlossen ist.
b. Die metallische Membran ist durch Verschweißung an dem becherförmig ausgebildeten Gehäuseteil fixiert.
c. Die metallische Membran umfasst eine Einbuchtung, in deren Bereich sich die Membran durch die Durchbrechung ins Gehäuseinnere erstreckt.
d. Das zweite Kontaktblech ist gegenüber dem Boden des Gehäuses elektrisch isoliert.
e. Das zweite Kontaktblech ist durch Verschweißung mit dem sich ins Gehäuseinnere erstreckenden Teil der metallischen Membran verbunden.

Diese Ausführungsform bietet eine Möglichkeit, das erfindungsgemäße Energiespeicherelement mit einer zuverlässigen und gleichzeitig platzsparenden Sicherheitsfunktion auszustatten. Die metallische Membran lässt sich ohne Probleme in eine Vertiefung im Boden integrieren. Wenn man die elektrische Isolierung gegenüber dem Boden beispielsweise als dünne Kunststofffolie ausgestaltet, kann das zweite Kontaktblech flach auf dem Boden aufliegen, von diesem lediglich durch die dünne Folie getrennt. Tritt im Gehäuseinneren ein ausreichend hoher Überdruck auf, wird die Einbuchtung nach außen gedrückt, wobei die Membran von der Kontaktplatte abreißt. Dabei wird der elektrische Kontakt zur Kathode unterbrochen und ein eventueller Stromfluss wird gestoppt. Steigt der Druck dennoch weiter an, kann die Membran bersten.

Um zu gewährleisten, dass ein auftretender Innendruck in beabsichtigter Weise auf die Einbuchtung einwirken kann, kann es bevorzugt sein, in der zweiten Kontaktplatte eine Durchbrechung, insbesondere ein Loch, vorzusehen, durch die der eingebuchtete Bereich mit dem Innenraum des Gehäuses in kommunizierender Verbindung steht.

Die Dicke der Membran kann an den Druck, bei dem die Sicherung auslösen soll, angepasst werden.

### Bevorzugte Ausgestaltung der Gehäuseteile

In einer weiteren besonders bevorzugten Ausführungsform der Erfindung zeichnet sich das erfindungsgemäße Energiespeicherelement durch mindestens eines der unmittelbar folgenden Merkmale a. bis c. aus:
a. Der Boden des becherförmig ausgebildeten Gehäuseteils weist eine Dicke im Bereich von 200 µm bis 2000 µm auf.
b. Die Seitenwand des becherförmig ausgebildeten Gehäuseteils weist eine Dicke im Bereich von 150 µm bis 2000 µm auf.
c. Das Deckelbauteil, insbesondere die Deckelplatte des Deckelbauteils, weist eine Dicke im Bereich von 200 µm bis 2000 µm auf.

Besonders bevorzugt sind die unmittelbar vorstehenden Merkmale a. bis c. in Kombination realisiert.

### Erfindungsgemäßer Verbund aus Energiespeicherelementen

Der erfindungsgemäße Verbund zeichnet sich durch die folgenden Merkmale aus:
a. Der Verbund umfasst mindestens zwei Energiespeicherelement gemäß einem der Ansprüche 1 bis 7 und
b. der Verbund umfasst einen elektrischen Leiter aus Aluminium oder aus einer Aluminiumlegierung, der mit dem negativen Anschlusspol eines der Energiespeicherelemente und mit einem Pol eines anderen der Energiespeicherelemente durch Verschweißungverbunden ist.

Bei dem Leiter aus Aluminium kann es sich beispielsweise um eine Aluminiumschiene handeln.

Als Aluminiumlegierung kommen für den Leiter beispielsweise Al-Legierungen vom Typ 1235, 1050, 1060, 1070, 3003, 5052, Mg3, Mg212 (Serie 3000) und GM55 in Frage. Weiterhin geeignet sind AlSi, AlCuTi, AlMgSi, AlSiMg, AlSiCu, AlCuTiMg und AlMg. Der Aluminiumanteil besagter Legierungen liegt bevorzugt oberhalb von 99,5 %.

Bevorzugt ist der elektrische Leiter mit dem ersten Kontaktierungsbereich des negativen Anschlusspols verbunden.

### Erfindungsgemäßes Verfahren

Das erfindungsgemäße Verfahren dient zur Herstellung des erfindungsgemäßen Verbunds und zeichnet sich durch die folgenden Schritte aus:
a. Es werden mindestens zwei Energiespeicherelement gemäß einem der Ansprüche 1 bis 7 und der elektrische Leiter aus Aluminium oder aus der Aluminiumlegierung bereitgestellt und
b. der elektrische Leiter aus Aluminium oder aus der Aluminiumlegierung wird mit dem negativen Anschlusspol eines der Energiespeicherelemente und mit einem Pol eines anderen der Energiespeicherelemente durch Verschweißung verbunden.

Besonders bevorzugt wird die Verschweißung mittels eines Lasers bewirkt.

### KURZBESCHREIBUNG DER ZEICHNUNGEN

Weitere Merkmale und Vorteile der Erfindung ergeben sich aus den Ansprüchen und aus der nachfolgenden Beschreibung von bevorzugten Ausführungsbeispielen der Erfindung in Verbindung mit den Zeichnungen. Die einzelnen Merkmale können dabei jeweils für sich oder in Kombination miteinander verwirklicht sein.

In den Zeichnungen zeigen schematisch
- Fig. 1 eine Ausführungsform eines erfindungsgemäßen Energiespeicherelements und dessen Verhalten im Falle eines Überdrucks in Folge einer Fehlfunktion (Querschnittsdarstellungen),
- Fig. 2 einen Elektroden-Separator-Verbund, der Bestandteil des in Fig. 1 dargestellten Energiespeicherelements ist, sowie dessen Komponenten,
- Fig. 3 zwei Kontaktbleche, die Bestandteile des in Fig. 1 dargestellten Energiespeicherelements sind, und
- Fig. 4 die Montage eines negativen Anschlusspols gemäß der Erfindung (Querschnittsdarstellungen).

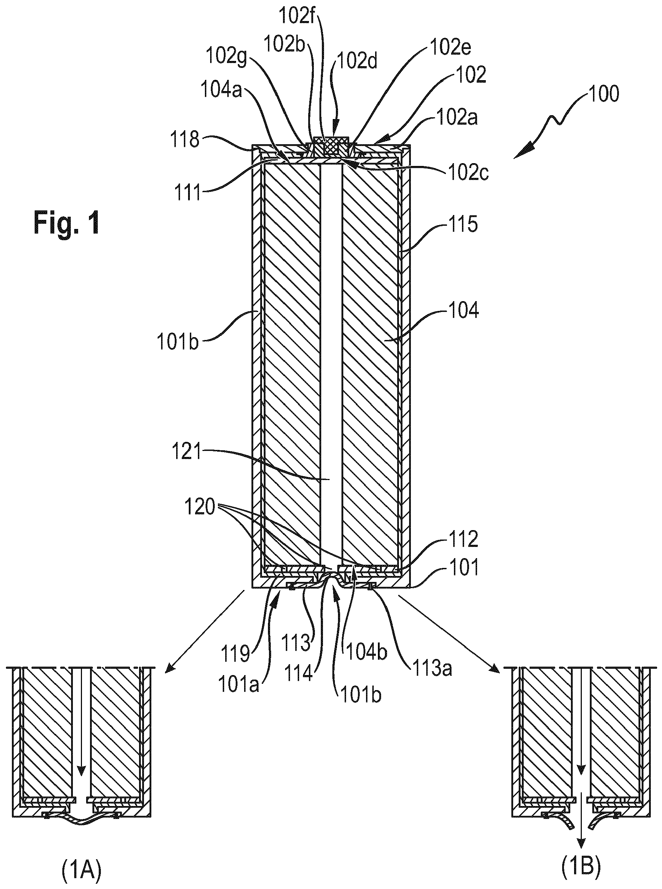

Das in **Fig. 1** dargestellte, als zylindrische Rundzelle mit 26 mm Durchmesser und 105 mm Höhe ausgebildete Energiespeicherelement umfasst ein luft- und flüssigkeitsdicht verschlossenes Gehäuse aus einem metallischen, becherförmig ausgebildeten Gehäuseteil 101, das einen Gehäuseboden 101a, einen zylindrischen Gehäusemantel 101b und eine kreisförmig ausgebildete endständige Öffnung umfasst, und einem Deckelbauteil 102 mit einem kreisförmigen Umfang. Das Deckelbauteil 102 ist derart in der kreisförmigen Öffnung des becherförmig ausgebildeten Gehäuseteils 101 angeordnet, dass sein Rand entlang einer umlaufenden Kontaktzone an der Innenseite des becherförmig ausgebildeten Gehäuseteils 101 anliegt, wobei der Rand des Deckelbauteils 102 mit dem becherförmig ausgebildeten Gehäuseteil 101 über eine umlaufende Schweißnaht 118 verbunden ist. Im Ergebnis ist das Deckelbauteil 102 in die endständige Öffnung des becherförmig ausgebildeten Gehäuseteils 101 eingeschweißt und verschließt diese. Das Deckelbauteil 102 umfasst eine metallische Deckelplatte 102a und einen negativen Anschlusspol 102b, der durch eine Durchbrechung in der Deckelplatte 102a geführt und gegenüber der Deckelplatte 102 elektrisch isoliert ist. Hierzu umfasst das Deckelbauteil 102 das ringförmige Isolierelement 102g.

In dem Gehäuse ist ein Elektroden-Separator-Verbund 104 angeordnet. Dieser liegt in Form eines zylindrischen Wickels vor, der neben einer ersten flachen endständigen Stirnseite 104a und einer zweiten flachen endständigen Stirnseite 104b einen zwischen den Stirnseiten liegenden Wickelmantel 104c aufweist. In dem Gehäuse ist der Elektroden-Separator-Verbund 104 axial ausgerichtet, so dass der Wickelmantel 104c an der Innenseite des zylindrischen Gehäusemantels 101b anliegt. Zwischen dem Wickelmantel 104c und der Innenseite ist lediglich noch eine elektrisch isolierende Schicht 115, beispielsweise aus einer oder mehreren Kunststofffolien, angeordnet. Die elektrisch isolierende Schicht 115 erstreckt sich nahezu über die gesamte Innenseite des Gehäuses. Sowohl die Seitenwand des Gehäuseteils 101 als weite Bereiche seines Bodens 101a und die Innenseite der Deckelplatte 102a sind gegenüber einem unmittelbaren und damit auch einem elektrischen Kontakt mit einer Komponente des Elektroden-Separator-Verbunds 104 abgeschirmt.

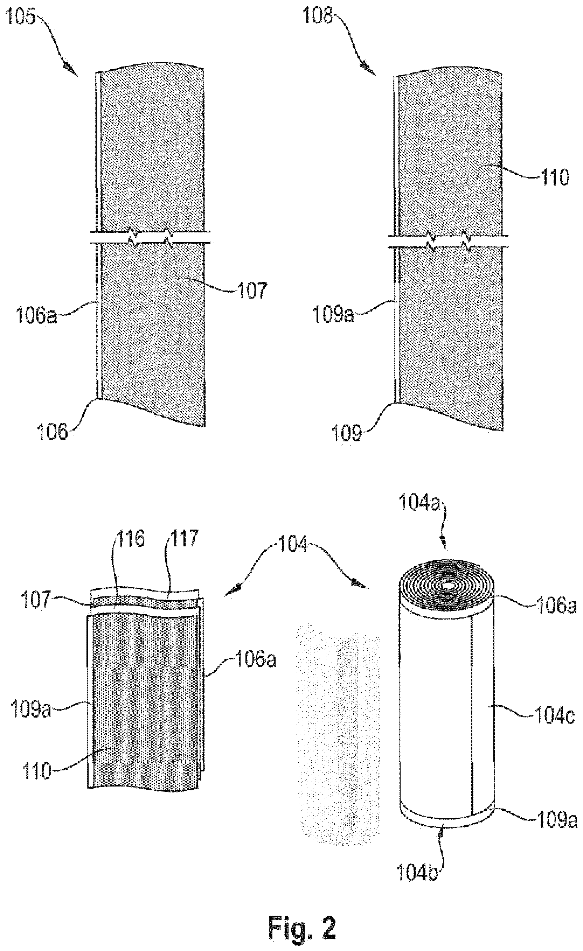

Der Aufbau des Elektroden-Separator-Verbund 104 wird anhand von **Fig. 2** veranschaulicht. Der Verbund 104 umfasst die bandförmige Anode 105 (Fig. 2A) mit dem bandförmigen Anodenstromkollektor 106, der einen ersten Längsrand 106a und einen dazu parallelen zweiten Längsrand aufweist. Bei dem Anodenstromkollektor 106 handelt es sich um eine Folie aus Kupfer oder Nickel. Diese umfasst einen bandförmigen Hauptbereich, der mit einer Schicht aus negativem Elektrodenmaterial 107 beladen ist, sowie einen freien Randstreifen 106b, der sich entlang seines ersten Längsrands 106a erstreckt und der nicht mit dem Elektrodenmaterial 107 beladen ist. Weiterhin umfasst der Verbund 104 die bandförmige Kathode 108 (Fig. 2B) mit dem bandförmigen Kathodenstromkollektor 109, der einen ersten Längsrand 109a und einen dazu parallelen zweiten Längsrand aufweist. Bei dem Kathodenstromkollektor 109 handelt es sich um eine Aluminiumfolie. Er umfasst einen bandförmigen Hauptbereich, der mit einer Schicht aus positivem Elektrodenmaterial 110 beladen ist, sowie einen freien Randstreifen 109b, der sich entlang seines ersten Längsrands 109a erstreckt und der nicht mit dem Elektrodenmaterial 110 beladen ist. Beide Elektroden sind einzeln in ungewickeltem Zustand dargestellt.

Die Anode 105 und die Kathode 108 sind innerhalb des Elektroden-Separator-Verbunds 104 versetzt zueinander angeordnet, so dass der erste Längsrand 106a des Anodenstromkollektors 106 aus der ersten endständigen Stirnseite 104a und der erste Längsrand 109a des Kathodenstromkollektors 109 aus der zweiten endständigen Stirnseite 104b des Elektroden-Separator-Verbunds 104 austritt. Die versetzte Anordnung geht aus Fig. 2C hervor. Dortsind auch die zwei bandförmigen Separatoren 116 und 117 dargestellt, die im Wickel die Elektroden 105 und 108 voneinander trennen.

In Fig. 2 D ist der Elektroden-Separator-Verbunds 104 in gewickelter Form dargestellt, wie er in einem Energiespeicherelement gemäß Fig. 1 zum Einsatz kommen kann. Die aus den Stirnseiten (104a, 104b) austretenden Elektrodenränder (106a, 109a) sind gut zu erkennen. Der Wickelmantel 104c wird durch eine Kunststofffolie gebildet.

Aber zurück zu **Fig. 1**, das Energiespeicherelement 100 umfasst weiterhin das Kontaktblech 111. Dieses sitzt auf dem ersten Längsrand 106a des Anodenstromkollektors 106 auf und ist mit diesem durch Verschweißung verbunden. Weiterhin ist das Kontaktblech 111 mit dem durch die Durchbrechung in der Deckelplatte 102a geführten negativen Anschlusspol 102b unmittelbar verbunden. Dieser ist nämlich auf das Kontaktblech 111 aufgeschweißt. Die Isolierschicht 115 unterbindet einen Kontakt der Ränder des Kontaktblechs 111 mit dem Gehäuseteil 101 und einen Kontakt der Kontaktplatte 111 mit der Deckelplatte 102a. Ein zweites Kontaktblech 112 sitzt auf dem überstehenden ersten Rand 109a des Kathodenstromkollektors 109 auf und ist mit diesem durch Verschweißung verbunden.

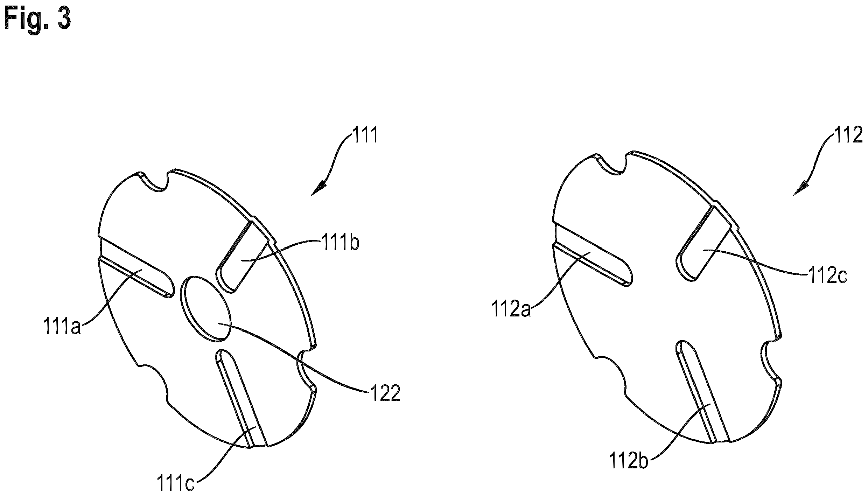

Die zwei Kontaktbleche 111 und 112 sind in **Fig. 3** dargestellt. Bei beiden handelt es sich um flache Metallscheiben mit einer Dicke im Bereich von 150 µm bis 350 µm. Die Metallscheibe 112 besteht aus Aluminium, die Scheibe 111 aus Kupfer oder Nickel. Die Kontaktbleche 111 und 112 haben einen Durchmesser, der im Wesentlichen dem Durchmesser des als Wickel ausgebildeten Elektroden-Separator-Verbunds entspricht. Sie decken damit die Stirnseiten 104a und 104b nahezu vollständig ab. Das Kontaktblech 112 weist ein zentrales Loch 122 auf, das u.a. beim Tränken des Elektroden-Separator-Verbunds mit einem Elektrolyten hilfreich sein kann. Beide Kontaktbleche 111 und 112 weisen jeweils drei Sicken (111a, 111b, 111c; 112a, 112b, 112c) auf. Im Bereich dieser Sicken sind die Kontaktbleche 111 und 112 mit den Rändern 106a und 109a verschweißt.

Der in **Fig. 1** dargestellte negative Anschlusspol 102b umfasst ein becherförmiges erstes Teil 102e, das an seinem Boden einen ersten Kontaktierungsbereich 102c umfasst. Dieser Kontaktierungsbereich sitzt unmittelbar auf dem Kontaktblech 111 auf und ist mit diesem durch Verschweißung verbunden. Die Verschweißung kann beispielsweise mittels eines Lasers erfolgen. Das becherförmige Teil 102e besteht aus Nickel oder Kupfer. Um die Verschweißung zu erleichtern, besteht es bevorzugt aus dem gleichen Material wie das Kontaktblech 111. Weiterhin umfasst der negative Anschlusspol 102b ein zweites Teil 102f aus Aluminium oder aus einer Aluminiumlegierung. Dieses umfasst einen zweiten Kontaktierungsbereich 102d. Das zweite Teil 102f umfasst einen stiftförmigen Abschnitt 102g, der in dem becherförmigen Teil 102e mechanisch fixiert ist. Bevorzugt ist das zweite Teil 102f in das becherförmige Teil 102e eingepresst oder in dem becherförmigen Teil 102e mittels Verschraubung fixiert. Eine zusätzliche Fixierung mittels Verschweißung ist möglich.

Der zweite Kontaktierungsbereich 102d ist von außerhalb des Gehäuses mechanisch kontaktierbar. Aufgrund seiner materiellen Beschaffenheit kann er mittels Laser problemlos an einen Stromleiter aus Aluminium geschweißt werden.

Das zweite Kontaktblech 112 ist mit dem becherförmig ausgebildeten Gehäuseteil 101 elektrisch verbunden, und zwar ausschließlich über die metallische Membran 113. Ansonsten ist das zweite Kontaktblech 112 gegenüber dem Boden 101a elektrisch isoliert, und zwar mittels der Isolierung 119, die als Scheibe ausgebildet sein kann, gegebenenfalls auch Teil der isolierenden Schicht 115 sein kann.

Die Membran 113 verschließt eine Durchbrechung 101b im Boden 101a des Gehäuseteils 101. Zwecks Platzersparnis weist der Boden 101a auf seiner Außenseite um die Durchbrechung 101b herum eine ringförmige, flache Ausnehmung auf, in welcher die Membran 113 durch Verschweißung an das becherförmig ausgebildete Gehäuseteil 101 fixiert ist. Die Membran 113 weist in der Folge die ringförmige Schweißnaht 113a auf. In ihrem Zentrum weist die metallische Membran 113 eine Einbuchtung 114 auf, in deren Bereich sich die Membran 113 durch die Durchbrechung 101b ins Gehäuseinnere erstreckt. Das zweite Kontaktblech 112 ist durch Verschweißung mit dem sich ins Gehäuseinnere erstreckenden Teil der metallischen Membran 113 verbunden.

Das Kontaktblech 112 weist vorteilhafterweise mehrere Löcher 120 auf. Über eines der Löcher ist die Durchbrechung 101b mit einem axialen Hohlraum 121 innerhalb des Elektroden-Separator-Verbundes 104 gekoppelt. Tritt im Gehäuseinneren ein Überdruck auf, kann der Druck über eines oder mehrere der Löcher auf die Membran 113 wirken. Ist der Druck ausreichend hoch, so wird die Einbuchtung 114 nach außen gedrückt, wobei die Membran 113 von der Kontaktplatte 112 abreißt, wie es in Fig. 1A dargestellt ist. Dabei wird der elektrische Kontakt zur Kathode 108 unterbrochen und ein eventueller Stromfluss wird gestoppt. Steigt der Druck dennoch weiter an, kann die Membran bersten, siehe Fig. 1B.

Die dargestellte Lösung ist insoweit vorteilhaft, als die Sicherungsfunktion in den Gehäuseboden 101a integriert ist und somit keinen Platz innerhalb des Gehäuses beansprucht. Trotzdem istsie ausgesprochen zuverlässig.

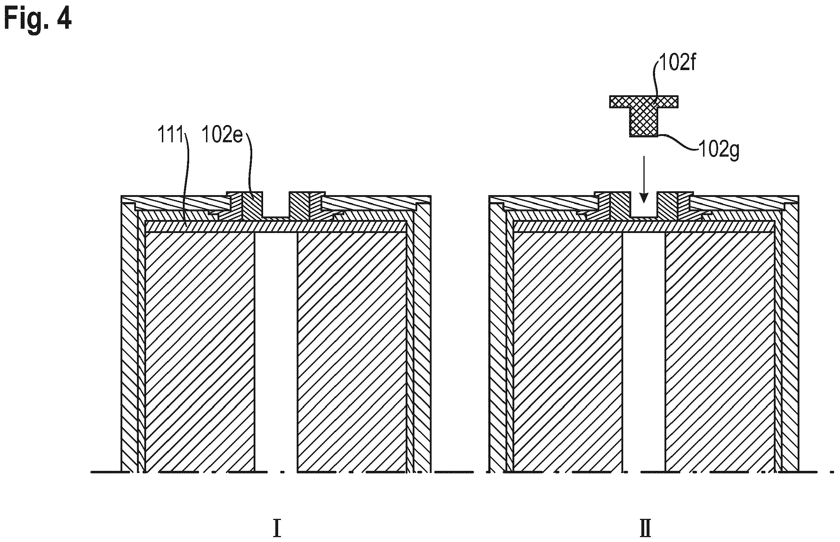

In **Fig. 4** ist die Montage des in Fig. 1 dargestellten negativen Anschlusspols 102b illustriert. Hierzu wird zunächst der Boden des becherförmigen ersten Teils 102e mit dem Kontaktblech 111 durch Verschweißung verbunden. Die Verschweißung erfolgt vorliegend mittels eines Lasers. Anschließend wird der stiftförmigen Abschnitt 102g des zweiten Teils 102f in das becherförmige Teil 102e eingepresst.

## Patentansprüche

1. Energiespeicherelement (100) mit den Merkmalen
a. Es umfasst ein luft- und flüssigkeitsdicht verschlossenes Gehäuse und einen darin angeordneten Elektroden-Separator-Verbund (104),
b. das Gehäuse umfasst ein metallisches, becherförmig ausgebildetes Gehäuseteil (101), das einen Gehäuseboden (101a) und eine endständige Öffnung umfasst,
c. das Gehäuse umfasst ein Deckelbauteil (102), das in die endständige Öffnung des becherförmig ausgebildeten Gehäuseteils (101) eingeschweißt ist und diese verschließt,
d. das Deckelbauteil (102) umfasst eine metallische Deckelplatte (102a) und einen negativen Anschlusspol (102b), der durch eine Durchbrechung in der Deckelplatte (102) geführt und gegenüber der Deckelplatte (102) elektrisch isoliert ist,
e. der Elektroden-Separator-Verbund (104) umfasst eine erste flache endständige Stirnseite (104a) und eine zweite flache endständige Stirnseite (104b),
f. der Elektroden-Separator-Verbund (104) umfasst eine Anode (105) mit einem Anodenstromkollektor (106), der einen ersten Rand (106a) und einen dazu parallelen zweiten Rand aufweist,
g. der Anodenstromkollektor (106) umfasst einen Hauptbereich, der mit einer Schicht aus negativem Elektrodenmaterial (107) beladen ist, sowie einen freien Randstreifen (106b), der sich entlang seines ersten Rands (106a) erstreckt und der nicht mit dem Elektrodenmaterial (107) beladen ist,
h. der Elektroden-Separator-Verbund (104) umfasst eine Kathode (108) mit einem Kathodenstromkollektor (109), der einen ersten Rand (109a) und einen dazu parallelen zweiten Rand aufweist,
i. der Kathodenstromkollektor (109) umfasst einen Hauptbereich, der mit einer Schicht aus positivem Elektrodenmaterial (110) beladen ist, sowie einen freien Randstreifen (109b), der sich entlang seines ersten Rands (109a) erstreckt und der nicht mit dem Elektrodenmaterial (110) beladen ist,
j. die Anode (105) und die Kathode (108) sind innerhalb des Elektroden-Separator-Verbunds (104) derart angeordnet, dass der erste Rand (106a) des Anodenstromkollektors (106) aus der ersten endständigen Stirnseite (104a) und der erste Rand (109a) des Kathodenstromkollektors (109) aus der zweiten endständigen Stirnseite (104b) des Elektroden-Separator-Verbunds (104) austritt,
k. das Energiespeicherelement umfasst ein Kontaktblech (111), das auf dem ersten Rand (106a) des Anodenstromkollektors (106) aufsitzt und mit diesem durch Verschweißung verbunden ist,
l. das Kontaktblech (111) ist mit dem durch die Durchbrechung in der Deckelplatte (102a) geführten negativen Anschlusspol (102b) elektrisch verbunden,
m. Der negative Anschlusspol (102b) umfasst einen ersten Kontaktierungsbereich (102c) aus Nickel oder Kupfer oder Titan oder einer Nickel- oder Kupfer- oder Titanlegierung oder Edelstahl und einen zweiten Kontaktierungsbereich (102d) aus Aluminium oder einer Aluminiumlegierung, und
n. der zweite Kontaktierungsbereich (102d) ist von außerhalb des Gehäuses mechanisch kontaktierbar.

2. Energiespeicherelement nach Anspruch 1 mit mindestens einem der folgenden zusätzlichen Merkmale:
a. Das becherförmig ausgebildete Gehäuseteil (101) besteht aus Aluminium oder einer Aluminiumlegierung.
b. Die Deckelplatte (102a) bestehtaus Aluminium oder einer Aluminiumlegierung.
c. Der Deckelbauteil (102) umfasst einen separaten positiven Anschlusspol, der aufder Deckelplatte (102a) fixiert ist, insbesondere an die Deckelplatte (102a) angeschweißt ist, und der aus Aluminium oder aus einer Aluminiumlegierung besteht.
d. Das becherförmig ausgebildete Gehäuseteil (101) und die Deckelplatte (102a) und der separate positive Anschlusspol bestehen aus Aluminium oder einer Aluminiumlegierung.

3. Energiespeicherelement nach Anspruch 1 oder nach Anspruch 2 mit mindestens einem der folgenden zusätzlichen Merkmale:
a. Das Kontaktblech (111) besteht aus Nickel oder Kupfer oder Titan oder eine Nickel-oder Kupfer- oder Titanlegierung oder Edelstahl.
b. Das Kontaktblech (111) besteht aus dem gleichen Material wie der erste Kontaktierungsbereich (102c).
c. Das Kontaktblech (111) besteht aus dem gleichen Material wie der Anodenstromkollektor (106).

4. Energiespeicherelement nach einem der vorhergehenden Ansprüche mit mindestens einem der folgenden zusätzlichen Merkmale:
a. Das Kontaktblech (111) weist eine bevorzugt gleichmäßige Dicke im Bereich von 50 µm bis 600 µm, bevorzugt im Bereich von 150 µm bis 350 µm, auf.
b. Das Kontaktblech (111) weist zwei sich gegenüberliegenden Flachseiten auf und erstreckt sich im Wesentlichen nur in einer Dimension.
c. Das Kontaktblech (111) ist eine Scheibe oder eine bevorzugt rechteckige Platte.
d. Das Kontaktblech (111) ist derart dimensioniert, dass es mindestens 60 % der Stirnseite, bevorzugt mindestens 70 %, besonders bevorzugt mindestens 80 %, der ersten endständigen Stirnseite abdeckt.
e. Das Kontaktblech (111) weist mindestens eine Durchbrechung, insbesondere mindestens ein Loch und oder mindestens einen Schlitz, auf.
f. Das Kontaktblech (111) weist mindestens eine Sicke auf, die auf einer Flachseite des Kontaktblechs (111) als längliche Vertiefung und auf der gegenüberliegenden Flachseite als längliche Erhöhung zu Tage tritt, wobei das Kontaktblech (111) mit der Flachseite welche die längliche Erhöhung trägt, auf dem ersten Rand (106a) des Anodenstromkollektors (106) aufsitzt.
g. Das Kontaktblech (111) ist im Bereich der Sicke mit dem ersten Rand (106a) des Anodenstromkollektors (106) verschweißt, insbesondere über eine oder mehrere in der Sicke angeordnete Schweißnähte.

5. Energiespeicherelement nach einem der vorhergehenden Ansprüche mit mindestens einem der folgenden zusätzlichen Merkmale:
a. Das Energiespeicherelement umfasst ein zweites Kontaktblech (112), das auf dem ersten Rand (109a) des Kathodenstromkollektors (109) aufsitzt und mit diesem durch Verschweißung verbunden ist.
b. Das zweite Kontaktblech (112) ist mit dem becherförmig ausgebildetes Gehäuseteil (101) elektrisch verbunden.
c. Das zweite Kontaktblech (112) besteht aus Aluminium oder aus einer Aluminiumlegierung.

6. Energiespeicherelement nach einem der vorhergehenden Ansprüche mit mindestens einem der folgenden zusätzlichen Merkmale:
a. Der negative Anschlusspol (102b) umfasst ein rohrförmigesoder becherförmigeserstes Teil (102e), das den ersten Kontaktierungsbereich (102c) umfasst.
b. Das rohrförmige oder becherförmige Teil (102e) besteht aus Nickel oder Kupfer oder Titan oder einer Nickel- oder Kupfer- oder Titanlegierung oder aus Edelstahl.
c. Der negative Anschlusspol (102b) umfasst ein endständiges rohrförmiges oder becherförmiges erstes Teil, das eine Hülle aus Nickel oder Kupfer oder einer Nickel- oder Kupferlegierung aufweist, insbesondere mit dem Nickel oder dem Kupfer oder der Nickel- oder Kupferlegierung beschichtet ist.
d. Der negative Anschlusspol (102b) umfasst ein zweites Teil (102f) aus Aluminium oder einer Aluminiumlegierung, das den zweiten Kontaktierungsbereich (102d) umfasst.
e. Das zweite Teil (102f) ist an dem ersten Teil (102e) mechanisch und/oder mittels Verschweißung fixiert.
f. Das zweite Teil (102f) umfasst einen stiftförmigen Abschnitt (102g), der in dem rohrförmigen oder becherförmigen Teil (102e) mechanisch fixiert ist, bevorzugt in das rohrförmige oder becherförmige Teil (102e) eingepresst oder in dem rohrförmigen oder becherförmigen Teil (102e) mittels Verschraubung fixiert ist.

7. Energiespeicherelement nach einem der Ansprüche 5 oder 6 mit den folgenden zusätzlichen Merkmalen:
a. Der Boden (101a) des becherförmig ausgebildeten Gehäuseteils (101) umfasst eine Durchbrechung (101b), die mittels einer metallischen Membran (113) verschlossen ist.
b. Die metallische Membran (113) ist durch Verschweißung an dem becherförmig ausgebildeten Gehäuseteil (101) fixiert.
c. Die metallische Membran (113) umfasst eine Einbuchtung (114), in deren Bereich sich die Membran (113) durch die Durchbrechung (101b) ins Gehäuseinnere erstreckt.
d. Das zweite Kontaktblech (112) ist gegenüber dem Boden (101a) des Gehäuses elektrisch isoliert.
e. Das zweite Kontaktblech (112) ist durch Verschweißung mit dem sich ins Gehäuseinnere erstreckenden Teil der metallischen Membran (113) verbunden.

8. Verbund aus Energiespeicherelementen mit den Merkmalen
a. Der Verbund umfasst mindestens zwei Energiespeicherelement (100) gemäß einem der Ansprüche 1 bis 7 und
b. derVerbund umfasst einen elektrischen Leiter aus Aluminium oder aus einer Aluminiumlegierung, der mit dem negativen Anschlusspol (102b) eines der Energiespeicherelemente und mit einem Pol (102b) eines anderen der Energiespeicherelemente durch Verschweißung verbunden ist.

9. Verfahren zur Herstellung eines Verbunds aus Energiespeicherelementen (100) mit den Schritten
a. Es werden mindestens zwei Energiespeicherelemente (100) gemäß einem der Ansprüche 1 bis 7 und ein elektrischer Leiter aus Aluminium oder aus einer Aluminiumlegierung bereitgestellt und
b. der elektrische Leiter aus Aluminium oder aus der Aluminiumlegierung wird mit dem negativen Anschlusspol (102b) eines der Energiespeicherelemente und mit einem Pol (102b) eines anderen der Energiespeicherelemente durch Verschweißung verbunden.
